(19) Europäisches Patentamt / European Patent Office / Office européen des brevets

(11) **EP 4 123 281 B1**

(12) **FASCICULE DE BREVET EUROPEEN**

(45) Date de publication et mention
de la délivrance du brevet:
**23.04.2025 Bulletin 2025/17**

(21) Numéro de dépôt: **22186150.3**

(22) Date de dépôt: **21.07.2022**

(51) Classification Internationale des Brevets (IPC):
**G01L 25/00** $^{(2006.01)}$     **G01L 1/14** $^{(2006.01)}$
**G01L 1/18** $^{(2006.01)}$     **G01L 1/20** $^{(2006.01)}$

(52) Classification Coopérative des Brevets (CPC):
**G01L 25/00; G01L 1/146; G01L 1/18; G01L 1/205**

(54) **CAPTEUR DE PRESSION MATRICIEL À RÉSEAU DE NEURONES ET PROCÉDÉ DE CALIBRATION**

MATRIXDRUCKSENSOR MIT NEURONALEM NETZWERK UND ENTSPRECHENDES KALIBRIERUNGSVERFAHREN

MATRIX PRESSURE SENSOR WITH NEURAL NETWORK AND CALIBRATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.07.2021 FR 2107976**

(43) Date de publication de la demande:
**25.01.2023 Bulletin 2023/04**

(73) Titulaire: **Commissariat à l'Energie Atomique et aux Energies Alternatives 75015 Paris (FR)**

(72) Inventeurs:
• **BARDET, Adrien 38054 GRENOBLE (FR)**
• **VIAL, Franck 38054 GRENOBLE (FR)**
• **ALOUI, Saifeddine 38054 GRENOBLE (FR)**

(74) Mandataire: **Cabinet Nony 11 rue Saint-Georges 75009 Paris (FR)**

(56) Documents cités:
**DE-A1- 19 947 733**

• **CASTRO FABIAN ET AL: "Plantar Pressure Measurement System With Improved Isolated Drive Feedback Circuit and ANN: Development and Characterization", IEEE SENSORS JOURNAL, IEEE, USA, vol. 20, no. 19, 28 May 2020 (2020-05-28), pages 11034 - 11043, XP011807467, ISSN: 1530-437X, [retrieved on 20200902], DOI: 10.1109/JSEN.2020.2998700**

## Description

### Domaine technique

La présente invention concerne les capteurs de pression, et plus particulièrement les capteurs de pression matriciels.

### Technique antérieure

La perception tactile est importante pour certaines applications de robotique. Pour permettre à des robots d'effectuer des tâches proches de celles de l'homme, par exemple celles impliquant de tenir et/ou manipuler un objet, il est désirable de savoir mesurer certaines propriétés du contact d'un objet extérieur avec une surface, notamment la pression ou distribution de pression exercée sur la zone de contact.

Il est connu d'utiliser un capteur de pression matriciel, c'est-à-dire comportant plusieurs éléments sensibles de mesure, dit « pixels », afin de mesurer une distribution de pression exercée sur une surface.

Cependant, de par leur conception et leur assemblage, les pixels présentent généralement des réponses inhomogènes et parfois dépendantes de celles de leurs voisins, en particulier si l'appui à l'origine de la pression n'est pas appliqué sur l'ensemble des pixels de la matrice.

Pour prendre en compte les phénomènes précités et compenser les effets de non-linéarité associés, le capteur est soumis à une phase de calibration avant son utilisation.

Dans le cas d'un capteur de pression « monopixel », une méthode de calibration classique consiste à appliquer plusieurs échelons d'effort connus sur le capteur, enregistrer les réponses associées et déterminer un modèle mathématique à partir de ces mesures pour pouvoir ensuite extrapoler la correction à toute nouvelle mesure du capteur.

Cette approche peut être appliquée à un capteur matriciel, comme décrit dans le brevet CN101281073, qui divulgue un procédé de calibration dans lequel on mesure la réponse du capteur à un effort de référence, pour différents efforts et pour chaque pixel de la matrice. Cependant, ce procédé d'acquisition est d'autant plus long que la matrice comporte de pixels, et ne permet pas de prendre en compte la dépendance éventuelle de la réponse d'un pixel vis-à-vis de celles de ses proches voisins, phénomène dit de couplage (« *crosstalk* » en anglais) entre les pixels.

Dans la demande CN110174213, les pixels sont soumis collectivement à un effort de référence à l'aide d'une plaque qui vient couvrir l'ensemble de la surface, de façon à solliciter les pixels simultanément et de manière égale. Les réponses individuelles des pixels sont enregistrées puis calibrées grâce à un modèle mathématique couplé à un algorithme d'ajustement de données, tel que la méthode des moindres carrés ou de maximum de vraisemblance. Cette demande CN110174213 divulgue par ailleurs une méthode pour traiter le *crosstalk* avec un coefficient correctif calculé via une loi algébrique, ladite loi reposant sur une combinaison linéaire des réponses calibrées du pixel à corriger et des pixels adjacents. Ce procédé de calibration nécessite toutefois une connaissance *a priori* de la loi algébrique de correction, ce qui n'est pas trivial car celle-ci dépend des caractéristiques de la matrice et de la forme des appuis sur la surface. La publication "Plantar Pressure Measurement System With Improved Isolated Drive Feedback Circuit and ANN: Development and Characterization", CASTRO FABIAN ET AL, IEEE SENSORS JOURNAL, vol. 20, no. 19, 28 mai 2020, pages 11034-11043, ISSN: 1530-437X, DOI: 10.1109/JSEN.2020.2998700, divulgue l'entraînement d'un capteur de force matriciel. Lors d'un test une partie du capteur est exposée à une pression homogène. De plus, toute modification de la disposition des pixels au sein de la matrice impose de trouver une nouvelle loi de correction algébrique, ce qui pour certaines configurations peut s'avérer particulièrement difficile.

### Exposé de l'invention

Il existe par conséquent un besoin pour perfectionner encore les capteurs de pression matriciels, notamment afin de disposer d'un capteur permettant de mesurer la distribution de pression exercée lors de divers types d'appuis, et dont la calibration est relativement simple, rapide et généralisable à plusieurs types de matrices.

### Résumé de l'invention

L'invention vise à répondre à ce besoin, et elle y parvient, selon un premier de ses aspects, grâce à un procédé de calibration selon la revendication 1 pour un capteur de pression matriciel.

Le capteur comporte

- une matrice de pixels tactiles dont certains au moins présentent entre eux un effet de couplage réciproque,
- un réseau de neurones pour traiter une image de la réponse du capteur et fournir une image corrigée, ce réseau ayant été entraîné à partir d'une base de données augmentée comportant :

o des données réelles d'appui homogène mesurées en appliquant une pression homogène à au moins une partie des pixels de la matrice, mieux à l'ensemble des pixels de la matrice, et

o des données additionnelles d'appui partiel produites par simulation en appliquant des masques binaires aux données réelles d'appui homogène, de manière à simuler des appuis partiels sans effet de couplage avec les pixels situés hors des zones d'appui partiel.

Le capteur selon l'invention permet une mesure fiable de la pression exercée lors d'un appui, y compris un appui de forme non triviale, et pour des dispositions régulières ou non des pixels au sein de la matrice.

Pixels tactiles

Les pixels peuvent être de type piézorésistif ou capacitif, étant de préférence de type piézorésistif.

L'invention s'applique à diverses distributions de pixels. Les pixels peuvent être répartis régulièrement dans une ou deux directions X, Y de la matrice, par exemple avec un pas selon X qui est le même que le pas selon Y. En variante, les pixels sont répartis sur la matrice avec une distribution non régulière dans au moins une direction. Cela peut permettre de gagner en précision, en augmentant par exemple la résolution spatiale, dans les zones où l'on a besoin de la précision la plus grande. La présence du réseau de neurones permet de calibrer aisément le capteur y compris pour de telles configurations.

Pour des pixels de type piézorésistif, le capteur présente par exemple l'une des structures suivantes :

a) Une première couche d'un polymère conducteur,

un réseau d'électrodes de colonnes sur la face extérieure de cette première couche de polymère conducteur, une deuxième couche d'un polymère conducteur faisant face à la première couche, un réseau d'électrodes de lignes sur la face extérieure de cette deuxième couche de polymère conducteur ;

b) Une couche de matériau piézorésistif, un réseau d'électrodes de colonnes sur une face de cette couche de matériau piézorésistif, et un réseau d'électrodes de lignes sur la face opposée de cette couche de matériau piézorésistif ;

c) Une première couche porteuse électriquement isolante, un réseau d'électrodes de colonnes sur la face intérieure de cette première couche porteuse, une couche d'un polymère conducteur ayant une première face en regard du réseau d'électrodes de colonnes, un réseau d'électrodes de lignes en regard de la deuxième face de la couche de polymère conducteur, et une deuxième couche porteuse électriquement isolante, sur la face intérieure de laquelle sont disposées les électrodes de lignes ; ou

d) Un substrat, des électrodes de lignes et de colonnes sur une même face de ce substrat, et une couche d'un polymère conducteur en regard de ces électrodes de lignes et de colonnes.

D'autres types de structures sont envisageables, notamment des structures hybrides entre celles qui viennent d'être décrites.

Les électrodes de lignes ou de colonnes peuvent être rectilignes et espacées avec un pas constant et être perpendiculaires les unes aux autres ; en variante, les électrodes de lignes et/ou de colonnes peuvent être espacées avec un écartement variable, par exemple qui diminue dans une région centrale du capteur.

D'autres géométries d'électrodes de lignes et de colonnes sont possibles.

Capteur de température

Le capteur selon l'invention peut comporter un capteur de température, le réseau de neurones ayant été entraîné de manière à prendre en compte l'influence de la température sur le comportement des pixels, en prenant la température comme entrée supplémentaire.

On peut ainsi tenir compte de l'influence de la température sur par exemple l'élasticité ou la résistivité des matériaux du capteur. Le capteur de température peut être intégré à la matrice de pixels ou situé ailleurs.

Le capteur selon l'invention peut le cas échéant comporter plusieurs capteurs de température, par exemple localisés dans différentes zones de la matrice.

Le capteur selon l'invention peut encore être placé dans une salle ou une enceinte à température ambiante contrôlée, le capteur de température mesurant la température ambiante.

Processeur

De préférence, le capteur comporte un processeur pour acquérir une image de la réponse du capteur en lisant séquentiellement les pixels ; de préférence, chaque pixel lu est alimenté et tous les autres pixels non lus sont mis à la masse pendant cette lecture, ce qui permet d'isoler électriquement le pixel lu et de réduire l'imprécision de lecture, notamment en améliorant la précision spatiale de la mesure.
Par « processeur » il faut comprendre de façon large tout type d'équipement électronique permettant d'effectuer les fonctions demandées ; par exemple, le processeur est une carte à microcontrôleur ou autre, et peut comporter une mémoire non volatile ainsi que divers circuits d'interface, par exemple de conversion A/N.
Le réseau de neurones peut être mis en œuvre avec le même processeur que celui qui effectue l'acquisition de la réponse des pixels ou avec tout autre carte ou circuit électronique.

Réseau de neurones

Le réseau de neurones peut présenter plusieurs types d'architectures.
Le réseau de neurones comporte par exemple une unique couche convolutionnelle et au moins une couche dense. L'avantage d'une telle architecture est d'effectuer uniquement des calculs relativement simples, et de fait rapides à exécuter et facilement portables au sein d'une unité de calcul légère de type microcontrôleur.
En variante, le réseau de neurones comporte des couches convolutionnelles et déconvolutionnelles. L'avantage d'une telle architecture est d'avoir un nombre de paramètres à mémoriser réduit.

Procédé de calibration

Dans le procédé de calibration d'un capteur tactile selon l'invention, le capteur comporte une matrice de pixels tactiles dont certains au moins présentent entre eux un effet de couplage réciproque, et le procédé comporte les étapes consistant à :

- appliquer sur une partie au moins des pixels, mieux sur l'ensemble des pixels, une pression homogène,
- générer ainsi une base de données réelles d'appui homogène en faisant l'acquisition de la réponse du capteur pour différentes valeurs de la pression appliquée,
- générer une base de données augmentée contenant des données additionnelles d'appui partiel obtenues par simulation en appliquant des masques binaires aux données réelles d'appui homogène, de manière à simuler des appuis partiels sans effet de couplage avec les pixels situés hors des zones d'appui partiel,
- entraîner au moins un réseau de neurones à délivrer une image corrigée de la réponse du capteur en utilisant la base de données augmentée.

Pour choisir le réseau de neurones adéquat, on soumet de préférence à l'apprentissage plusieurs réseaux de neurones d'architectures différentes, et l'on sélectionne le plus performant en soumettant le capteur à au moins un appui test différent d'un appui ayant servi pour l'entrainement des réseaux, notamment un appui test différent d'un appui homogène sur l'ensemble des pixels de la matrice, et en comparant les résultats produits par ces différents réseaux aux données réelles produites par l'appui test sur le capteur.
L'appui test consiste par exemple en un appui homogène exercé sur une partie seulement des pixels de la matrice, par exemple sur moins d'un quart des pixels de la matrice.
La sélection du réseau de neurones peut s'effectuer sur la base d'au moins un critère de sélection représentatif de l'écart entre la réponse pixel la plus élevée et la réponse pixel la plus faible pour cet appui test.
Lorsque le capteur dispose d'un capteur de température, le réseau de neurones peut être entraîné de manière à prendre en compte l'influence de la température sur le comportement des pixels, en prenant la température comme entrée supplémentaire.
Plusieurs masques binaires peuvent être utilisés simultanément sur une même image lors de la constitution de la base de données augmentée, en veillant à ce que les masques ne se chevauchent pas.
Les masques sont par exemple formés d'ellipsoïdes pixelisés dont les valeurs de grand axe, petit axe, orientation et coordonnées de leur centre sur la matrice sont variées, notamment pour simuler un appui ponctuel limité à un pixel ou l'appui d'un doigt sous forme de disque. La géométrie des masques peut être choisie en fonction de la nature des appuis que le capteur est ensuite susceptible de rencontrer, afin de spécialiser le réseau à corriger les réponses des pixels pour des appuis de cette nature.

# EP 4 123 281 B1

## Brève description des dessins

L'invention pourra être mieux comprise à la lecture de la description détaillée qui va suivre, d'exemples de mise en œuvre non limitatifs de celle-ci, et à l'examen du dessin annexé, sur lequel :

[Fig 1] représente de manière partielle et schématique un exemple de capteur de pression selon l'invention,
[Fig 2a] représente de manière partielle et schématique en coupe transversale un exemple de structure d'un pixel comportant des électrodes portées par deux couches de matériau faiblement conducteur,
[Fig 2b] représente de manière partielle et schématique en coupe transversale un autre exemple de structure d'un pixel comportant des électrodes situées de part et d'autre d'une même couche de matériau piézorésistif,
[Fig 2c] représente de manière partielle et schématique en coupe transversale un autre exemple de structure d'un pixel comportant des électrodes portées par deux couches isolantes et une couche de polymère conducteur,
[Fig 2d] représente de manière partielle et schématique en coupe transversale un autre exemple de structure d'un pixel comportant des électrodes sur la même face d'une couche isolante et une couche de polymère conducteur,
[Fig 3] représente de manière schématique et partielle un exemple de la mesure de résistance électrique entre les électrodes d'une matrice,
[Fig 4] est un schéma en blocs illustrant un exemple de procédé de lecture des pixels d'une matrice,
[Fig 5] illustre une vue de face partielle et schématique d'une matrice comportant des pixels répartis avec une distribution non régulière,
[Fig 6] est un diagramme en blocs illustrant un exemple de procédé de calibration d'un capteur tactile selon l'invention,
[Fig 7] représente de manière schématique et partielle certains détails de la première étape du procédé de calibration de la figure 6,
[Fig 8a] est un exemple d'images de pression mesurées par un capteur matriciel de taille 8x8 pixels lorsqu'il est soumis à diverses efforts homogènes,
[Fig 8b] représente les images de référence correspondant aux divers efforts homogènes exercés sur le capteur à la figure 8a,
[Fig 9] représente de manière schématique et partielle un exemple de masque binaire appliqué à une image des figures 8a et 8b.
[Fig 10] représente de manière schématique et partielle des exemples de sollicitations non homogènes du capteur servant à la troisième étape du procédé de la figure 3,
[Fig 11] illustre schématiquement la possibilité de corriger, grâce à un réseau de neurones, des images de pression mesurées lorsque le capteur est soumis à des sollicitations non homogènes telles que celle de la figure 10,
[Fig 12] illustre de manière schématique et partielle un exemple d'architecture d'un réseau de neurones du capteur selon l'invention, et,
[Fig 13] illustre de manière schématique et partielle un autre exemple d'architecture d'un réseau de neurones du capteur selon l'invention.

## Description détaillée

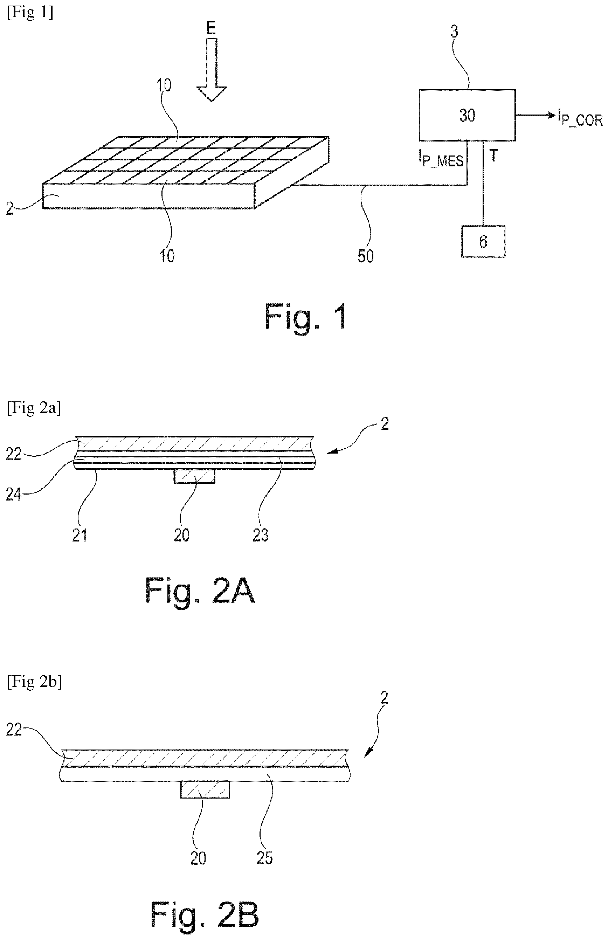

On a illustré à la figure 1 un exemple de capteur de pression 1 selon l'invention. Le capteur 1 comporte une matrice 2 de pixels tactiles 10. Dans l'exemple considéré, les pixels 10 sont répartis régulièrement selon une grille définissant par exemple une surface sensiblement plane sur lequel un effort E peut venir s'exercer.

Le capteur 1 comporte un circuit de traitement 3 relié à la matrice 2, par exemple par une liaison filaire 50, qui traite la réponse $I_{P\_MES}$ de la matrice 2 grâce à un réseau de neurones artificiels 30 afin de fournir une réponse corrigée $I_{P\_COR}$.

Dans l'exemple considéré, la réponse $I_{P\_MES}$ est « l'image » de pression mesurée par la matrice 2 lorsqu'elle est soumise à l'effort E, ladite image comportant des pixels représentant la pression mesurée individuellement par chacun des pixels 10.

La réponse $I_{P\_MES}$ est par exemple constituée de valeurs encodées sur des entiers signés sur 16 bits.

La réponse corrigée $I_{P\_COR}$ est l'image de pression corrigée afin de prendre en compte certains défauts du capteur 1, tels que la non-linéarité éventuelle de sa réponse, l'effet de couplage réciproque entre certains pixels, et éventuellement sa dépendance à la température.

Le réseau de neurones 30 est entrainé au préalable lors d'une phase de calibration du capteur 1, comme cela est décrit après.

Le capteur 1 peut être agencé pour mesurer également au moins une autre grandeur que la pression exercé sur la matrice. Il peut comporter un capteur 6 de température, comme illustré à la figure 1, ce qui permet de prendre en compte l'influence de la température sur la réponse des pixels.

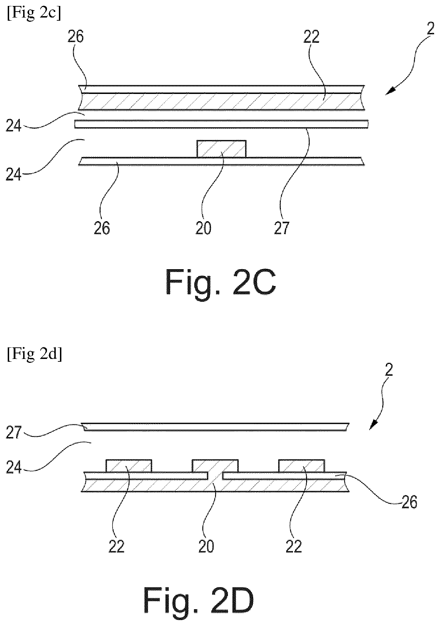

La matrice 2 de pixels 10 est par exemple de type piézo-résistive. Dans ce cas, les pixels 10 peuvent être réalisés de différentes manières, dont certaines sont représentées aux figures 2a, 2b, 2c, et 2d.

Comme illustré à la figure 2a, une première électrode 20 peut être imprimée sur une couche de matériau faiblement conducteur 21, par exemple un polymère chargé en particules de carbone, et une deuxième électrode 22 peut être imprimée sur une autre couche de matériau faiblement conducteur 23. Les couches 21 et 23 sont ensuite superposées de manière à ce que les électrodes 20 et 22 soient disposées à l'extérieur de l'ensemble. Les deux couches 21 et 23 sont par exemple séparées par une fine lame d'air 24, et ne se touchent avec un contact électrique satisfaisant que lorsqu'une pression est exercée sur l'ensemble.

Dans l'exemple de cette figure, les électrodes 20 et 22 ont chacune une forme linéaire et sont agencées perpendiculairement les unes par rapport aux autres.

Une pression P exercée sur la matrice 2 fait varier la surface de contact entre les couches 21 et 23, ce qui induit un changement de la résistance électrique dans la zone de mesure où les électrodes 20 et 22 s'intersectent. On peut mesurer cette variation de la résistance électrique de diverses façons. On applique par exemple une tension entre les électrodes et on mesure le courant correspondant. On peut encore mesurer la tension aux bornes de la résistance par la technique du pont diviseur résistif, ou en injectant un courant connu.

Dans une variante illustrée à la figure 2b, les électrodes 20 et 22 sont imprimées de part et d'autre d'une même couche de matériau intrinsèquement piézorésistif 25, qui se déforme sous l'action des efforts exercés sur la matrice 2, provoquant similairement à l'exemple précédent une variation de la résistivité électrique dans la zone d'intersection des électrodes.

Dans d'autres variantes, les électrodes sont portées par un substrat isolant, notamment souple, par exemple en PET. Les électrodes 20 et 22 sont par exemple imprimées ou déposées chacune sur une couche souple 26 électriquement isolante et se font face, comme illustré à la figure 2c. Une couche faiblement conductrice 27, par exemple d'un polymère chargé en particules conductrices, éventuellement alvéolaire, ou bien d'un matériau piézorésistif, est disposée en sandwich entre les électrodes 20 et 22 et séparée de chaque électrode 20 ou 22 par une fine lame d'air 24.

Dans la variante de la figure 2d, les électrodes 20 et 22 sont portées par un même substrat 26 électriquement isolant, en regard d'une couche faiblement conductrice 27, par exemple un matériau alvéolaire compressible, ou un matériau non alvéolaire. Les électrodes sont séparées de la couche 27 par une fine lame d'air 24. Lors d'un effort exercé sur la matrice 2, la couche 27 peut venir au contact d'une partie des électrodes.

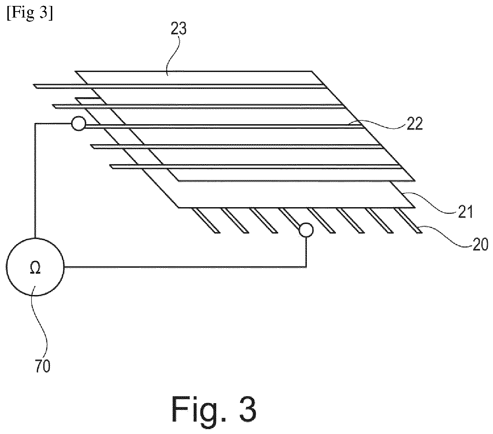

On peut réaliser l'ensemble des pixels 10 de la matrice 2 en imprimant N électrodes parallèles sur une face de la matrice, par exemple sur une couche de matériau faiblement conducteur 21, et M électrodes parallèles sur l'autre face, par exemple une couche de matériau faiblement conducteur 23, les M électrodes étant disposées perpendiculairement aux N électrodes, tel qu'illustré à la figure 3. Dans cet exemple, N désigne le nombre de lignes de la matrice 2, M le nombre de colonnes, et le croisement des électrodes définit les pixels 10.

Le matériau des couches 21 et 23 étant de préférence électriquement isotrope, un appui entre deux pixels 10 adjacents génère également une variation de la résistivité électrique pour ces deux pixels. Un appui sur un pixel peut ainsi « déborder » électriquement sur ses voisins, et donc générer un phénomène de couplage réciproque.

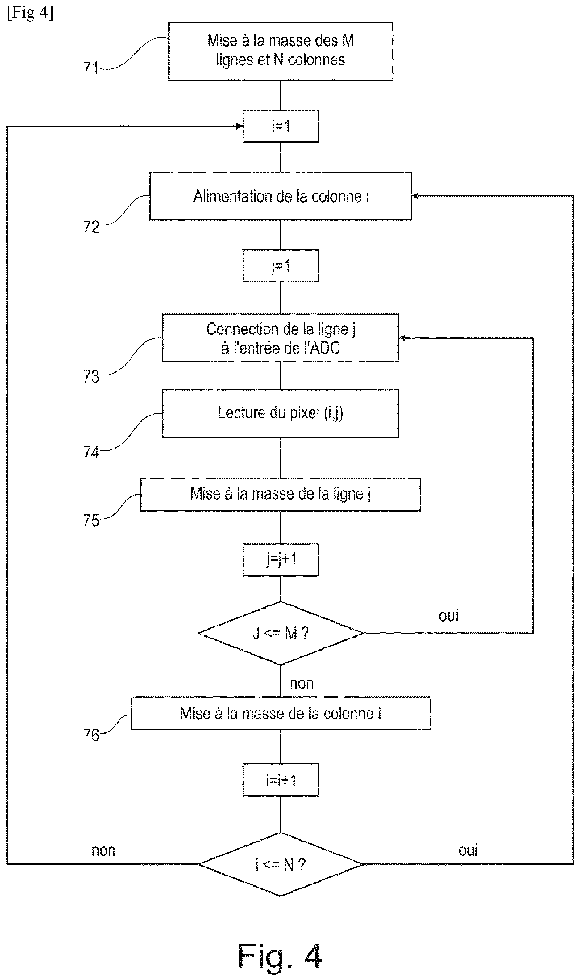

On peut mettre en œuvre un procédé de lecture des pixels 10 par balayage tel que celui illustré à la figure 4. Ce procédé, décrit ci-après, utilise une méthode similaire à celle proposée dans l'article « The UnMousePad - An Interpolating Multi-Touch Force-Sensing Input Pad » de Rosenberg et. Al (ACM SIGGRAPH 2009 papers. 2009. 1-9).

A la première étape 71 du procédé de lecture, on met l'ensemble des électrodes à la masse. On répète ensuite les étapes suivantes, pour i entier compris entre 1 et N :

- A l'étape 72, on alimente l'électrode i, et
- On répète, pour j entier compris entre 1 et M :

  o A l'étape 73, on connecte l'électrode j à l'entrée d'un circuit de lecture,
  o A l'étape 74, on lit le signal sur la zone de mesure correspondant à l'intersection des électrodes i et j, et
  o A l'étape 75, on met à la masse l'électrode j, et

- On met à la masse l'électrode i.

Cette méthode de lecture séquentielle, en alimentant tour à tour chacun des pixels 10, tout en connectant les autres électrodes à la masse (non représenté à la figure 3), permet avantageusement de limiter les artéfacts de mesure, tels que des signaux « fantômes », liés aux chemins de fuite du courant au sein de la structure de détection. Les composants électroniques, grâce au multiplexage des voies, peuvent de plus être mutualisés, ce qui peut réduire le coût de fabrication du capteur. En variante, plusieurs convertisseurs analogique/numérique sont utilisés avec ou non multiplexage des voies, notamment un convertisseur par électrode j connectée au circuit de lecture.

Le nombre et la répartition des pixels 10 ne sont bien entendu pas limités à l'exemple qui vient d'être décrit ; d'autres agencements sont possibles.

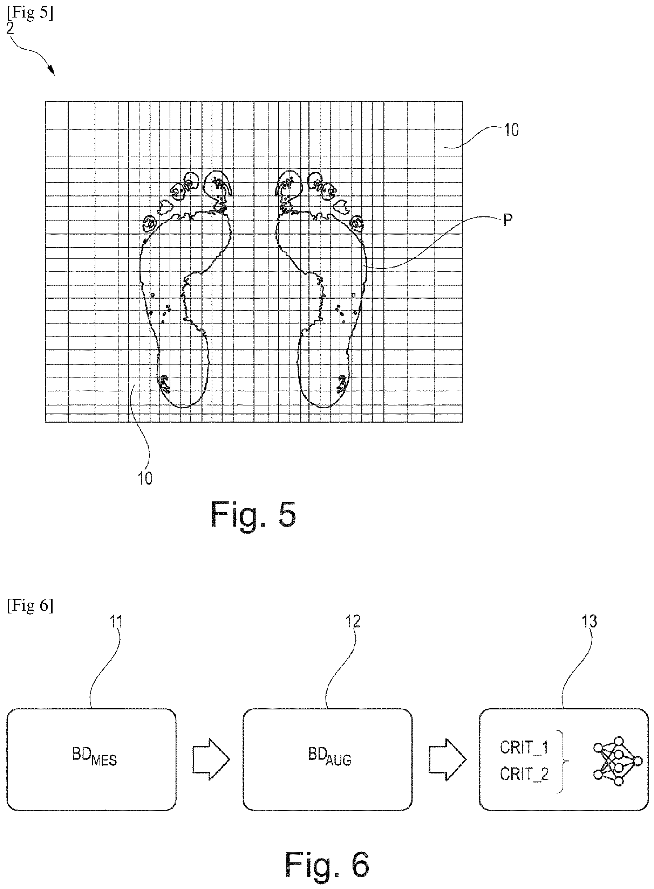

Ainsi, les pixels 10 peuvent encore être répartis avec une distribution non régulière, comme illustré à la figure 5, ce qui permet d'obtenir une résolution plus fine dans certaines zones de la matrice, selon les applications. Dans l'exemple de la dalle de podoscope illustrée à la figure 5, la densité de pixels est plus élevée dans les zones d'appui potentiel des pieds P, et moindre dans sa périphérie.

Le capteur 1 est de préférence placé dans une salle ou une enceinte à température ambiante contrôlée et le capteur 6 de température transmet la mesure de la température ambiante T au réseau de neurones 30 au moment de l'acquisition des données IP_MES de la matrice 2

On va maintenant décrire un exemple de procédé de calibration du capteur matriciel de pression en référence aux figures 6 à 9.

Dans l'exemple considéré, le procédé de calibration comporte trois étapes 11, 12 et 13, comme représenté à la figure 6.

A l'étape 11, on constitue une base de données $BD_{MES}$ de mesures réelles de pression homogène. Pour cela, le capteur 1 est soumis sur l'ensemble de la matrice 2 à un effort de pression homogène $P_R$ donnée, et les réponses de chaque pixel à cet effort sont mesurées et enregistrées.

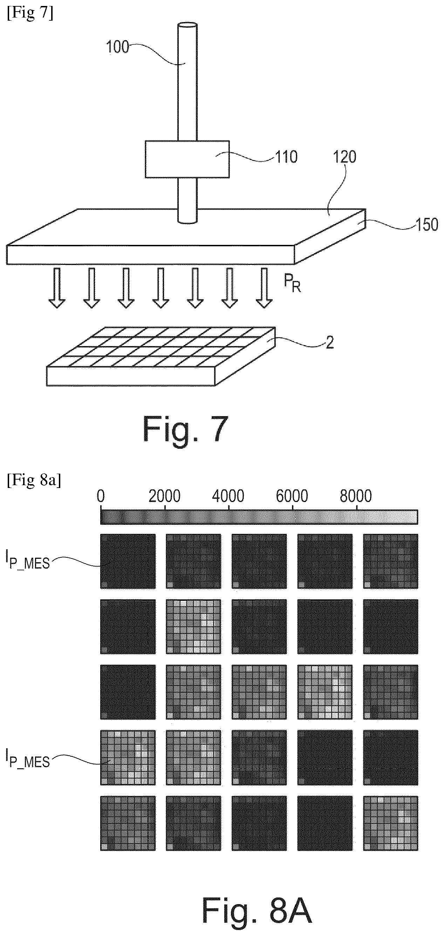

Pour appliquer une pression homogène $P_R$ donnée, on fixe par exemple une plaque 120 sur la tête mobile 100 d'un banc de mesure comportant un capteur d'effort de référence 110, comme illustré à la figure 7. Le capteur 110 mesure la pression $P_R$, aussi désignée comme « pression de référence » dans la suite, appliquée à la matrice 2.

La plaque 120 est de préférence de dimensions plus grandes que la matrice 2 du capteur à calibrer.

Afin d'homogénéiser spatialement la pression $P_R$ appliquée à la matrice 2, on peut rajouter une couche 150 d'un matériau déformable, entre la plaque 120 et la matrice 2. La couche 150 comporte par exemple une enveloppe en élastomère déformable remplie d'eau, d'un gel très souple de type graisse silicone ou encore d'un fluide compressible comme de l'air. L'enveloppe en élastomère est de préférence peu élastique, afin d'éviter un fluage latéral lors du pressage et de favoriser la transmission des efforts de la plaque 120 à la matrice 2.

La couche 150 est de dimensions plus grandes que la matrice 2 et permet d'épouser la surface de la matrice 2 en compensant les éventuels défauts de coplanarité entre la plaque 120 et la matrice 2, ces défauts pouvant autrement induire des pressions localement plus fortes.

La couche 150 permet encore de transmettre des efforts même relativement faibles à l'ensemble des pixels 10 simultanément, par exemple après un premier pressage qui lui permet de mémoriser l'empreinte de la matrice 2.

Pour la calibration, on choisit par exemple $N_C$ valeurs de pression de référence $P_R$ couvrant l'intervalle de la dynamique mesurable par la matrice 2.

L'échantillonnage des $N_C$ valeurs de pression de référence peut être fait de manière uniforme, par exemple en sélectionnant 41 valeurs par pas de 1 Newton entre 0 et 40 Newton.

L'échantillonnage peut encore suivre une autre loi de distribution, par exemple logarithmique, notamment lorsque la réponse des pixels 10 n'est pas linéaire et tend par exemple à s'aplatir pour les efforts élevés. Discrétiser plus finement les valeurs de pression $P_R$ les plus élevées permet ainsi de s'adapter à la réponse des pixels tout en maintenant une durée de calibration raisonnable.

Les $N_C$ valeurs de pression de référence $P_R$ choisies peuvent être appliquées de manière aléatoire, pour éviter un éventuel effet mémoire de la matrice, et répétées, par exemple 3 fois, pour introduire de la redondance et moyenner les réponses.

Chaque valeur de pression $P_R$ est par exemple maintenue quelques secondes pour permettre au système de trouver son équilibre mécanique et d'acquérir suffisamment de mesures stabilisées pour en faire ensuite une moyenne temporelle.

La pression théorique perçue par chaque pixel 10 est égale à la pression $P_R$ divisée par le nombre de pixels $N_P$. On choisit par exemple de soumettre chaque pixel à une pression variant entre 0 et 2 Newton, ce qui correspond à une pression de référence appliquée $P_R$ entre 0 et $(2 \times N_P)$ Newton.

La tête mobile 100 peut être montée sur un système amorti à base de ressort de manière à pouvoir absorber un déplacement vertical à mesure que la pression $P_R$ exercée augmente. Cela permet d'augmenter la course en déplacement vertical pour une plage d'efforts donnée et de relâcher des contraintes sur la résolution du contrôle des déplacements.

On peut utiliser un logiciel afin de synchroniser temporellement les données réelles de pression mesurées par la matrice 2 avec les pressions de référence $P_R$ associées, mesurées par le capteur 110.

Les données peuvent être post-traitées afin d'isoler les $N_C$ périodes sur lesquelles les réponses des $N_P$ pixels sont stables, et pour chacune de ces périodes, de calculer la valeur moyenne de chacun des pixels 10 ainsi que la valeur moyenne de la pression de référence $P_R$.

Les résultats sont sauvegardés dans la base de données $BD_{MES}$ sous forme d'une table de dimensions $(N_P+1) \times N_C$,

$N_P$ désignant le nombre de pixels 10,
$N_C$ désignant le nombre valeurs de pression de référence $P_R$ testées, et

le « +1 » correspondant à la pression de référence $P_R$.

Les données réelles de pression peuvent être représentées sous forme d'image de pression $I_{P\_MES}$, comme décrit plus haut et comme représenté à la figure 8a pour 25 images de pression délivrées par une matrice 8x8 pixels, soit $N_P$=64.

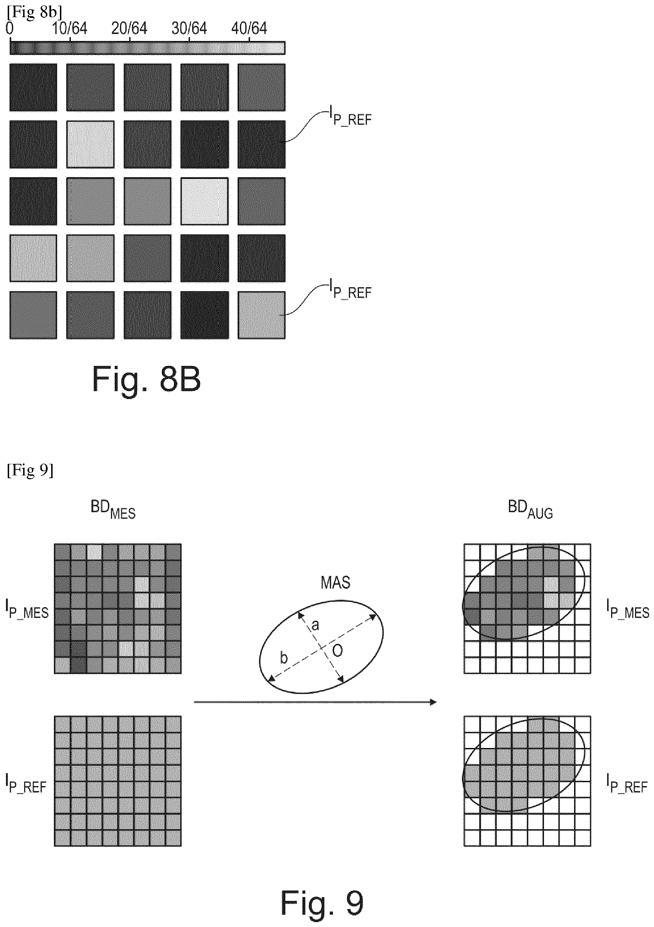

Ces 25 images représentent la réponse du capteur à 25 valeurs de pression de référence $P_R$ auxquelles la matrice 2 a été soumise de manière homogène, et peuvent être comparées à des images de référence $I_{P\_REF}$ telles que représentées à la figure 8b, sur lesquelles tous les pixels 10 ont une valeur identique égale à $P_R/N_P$ avec $N_P$= 64 et $P_R$ variant entre 0 et environ 45 Newton. Ainsi les valeurs de pression des pixels 10, identiques au sein d'une image de référence $I_{P\_REF}$, peuvent varier d'une image de référence à l'autre entre 0 et (45/64) Newton.

Contrairement à la pression appliquée, les images de pression $I_{P\_MES}$ apparaissent pixélisées, avec pour certains pixels des valeurs différentes, indiquant que les réponses des pixels ne sont pas homogènes et qu'une correction est nécessaire.

L'étape 11 peut être répétée pour différentes conditions de température, si cela est souhaité. Dans ce cas, la base de données $BD_{MES}$ est reproduite autant de fois que l'on impose de valeurs de températures, par exemple tous les 10°C entre 0°C et +40°C pour des applications en intérieur.

A l'étape 12, on génère une base de données augmentée $BD_{AUG}$ contenant des données additionnelles d'appui partiel.

Ces données additionnelles sont obtenues par simulation à partir de la base de données $BD_{MES}$ en appliquant des masques binaires aux données d'appui homogène.

Cette étape permet d'enrichir la base de données $BD_{MES}$, qui ne comporte que des données relatives aux réponses du capteur à des pressions homogènes exercées sur la matrice 2, cet enrichissement s'effectuant sans réaliser de nouvelles mesures.

Par « masque binaire », on désigne ici un masque géométrique qui, appliqué aux images $I_{P\_MES}$ et $I_{P\_REF}$ de la base de données $BD_{MES}$, conserve les mesures des pixels 10 et de la pression de référence $P_R$ contenus sous ce masque, tout en forçant à 0 les réponses des pixels situés en dehors de ce masque.

Forcer des réponses à 0 revient à annuler le couplage réciproque entre les pixels 10 sollicités et ceux non sollicités par le masque.

Les masques binaires sont par exemple définis par une ou plusieurs ellipsoïdes pixellisés, avec un pixel du masque égal à un pixel de la matrice, comme illustré sur la figure 9 pour un masque MAS appliqué sur une image mesurée $I_{P\_MES}$ et son image de référence $I_{P\_REF}$, pour une matrice de 8x8 pixels.

Les masques sont par exemple paramétrisés par le nombre d'ellipsoïdes et les valeurs de leur petit axe a, grand axe b, orientation, et coordonnées de leur centre O sur la matrice. Dans l'exemple illustré, le centre O du masque MAS est situé au niveau du pixel 4/4 (4ème colonne et 4ème ligne). Bien entendu, tout autre positionnement est envisageable.

Ces paramètres permettent ainsi de générer des masques allant d'un simple pixel, qui représente par exemple un appui très localisé, à un disque (pour représenter l'appui d'un doigt), une croix, un rectangle, ou tout autre forme d'intérêt.

Ces paramètres peuvent être choisis de manière aléatoire, ou de façon à couvrir toutes les combinaisons possibles pour une matrice 2 donnée.

On peut de plus jouer sur le nombre de masques afin de simuler des appuis multiples simultanés sur la matrice 2 et, le cas échéant, générer une image $I_{P\_MES}$ finale en appliquant une combinaison de plusieurs masques à un même niveau d'appui donné, ou à des niveaux d'appuis différents en utilisant les différentes images $I_{P\_REF}$ associées, et en sommant les images masquées correspondantes.

Pour éviter les problèmes de discontinuité d'efforts appliqués, on s'assure que les masques ne se chevauchent pas en appliquant par exemple une dilatation d'au moins un pixel entre deux masques adjacents, en calculant le résultat d'une fonction logique « ET » entre les masques puis en vérifiant que la somme est égale à 0. Si la somme est supérieure à 0 (indiquant que les masques se chevauchent) cette combinaison de masques n'est pas sélectionnée.

Générer M jeux de masques permet ainsi d'augmenter la taille de la base $BD_{MES}$ d'un facteur M. A titre d'exemple, pour une matrice de dimensions 8x8 pixels, couvrir toutes les configurations de masque possibles en se limitant à 1 seul masque et en figeant l'orientation de l'ellipsoïde à 0° revient à augmenter la base $BD_{MES}$ d'un facteur 4x4x64=1024 (4 valeurs de petit axe, 4 valeurs de grand axe, 8x8=64 positions du centre).

A l'étape 13, on entraîne le réseau de neurones 30 à délivrer une image $I_{P\_COR}$ de pression corrigée de la réponse du capteur en utilisant la base de données augmentée $BD_{AUG}$.

Grâce à l'enrichissement des données effectué à l'étape 12, le réseau de neurones 30 est entraîné avec des formes autres qu'uniquement des appuis homogènes sur l'ensemble des pixels de la matrice 2, ce qui permet d'améliorer les performances de la calibration et de la correction.

L'entraînement du réseau de neurones 30 consiste à déterminer les paramètres du modèle, c'est-à-dire ici moduler les poids synaptiques du réseau, de manière à faire tendre les réponses des pixels 10 vers la valeur de pression réelle à laquelle ils sont soumis.

Par exemple, pour une pression homogène $P_R$ appliquée sur l'ensemble de matrice 2, il s'agit d'homogénéiser les réponses des pixels 10 entre elles vers la valeur constante $P_R/N_P$ avec $N_P$ le nombre de pixels.

Pour ce faire, on peut suivre des méthodes d'apprentissage connues de l'homme du métier, par exemple basées sur la rétropropagation d'erreur. On sépare par exemple la base de données $BD_{AUG}$ en deux sous-ensembles, l'un servant pour la phase d'apprentissage du réseau, et l'autre pour la validation du réseau ainsi déterminé.

Avant de débuter l'apprentissage, on normalise de préférence chaque réponse d'un pixel 10 par sa valeur maximale atteinte dans la base de données $BD_{AUG}$.

Lors de la phase d'apprentissage, on fournit au réseau de neurones 30 les images mesurées $I_{P\_MES}$ du premier sous-ensemble, provenant pour les unes des données directes obtenues à l'étape 11 et pour les autres des données additionnelles générées à l'étape 12, ainsi que les images de référence $I_{P\_REF}$ associées.

Lors de la phase de validation, on fournit au réseau de neurones 10 les images mesurées $I_{P\_MES}$ du deuxième sous-ensemble et on compare les images corrigées $I_{P\_COR}$ générées en sortie par le réseau avec les images de référence $I_{P\_REF}$.

Un premier critère de validation CRIT1 de la performance du réseau peut être défini par une erreur quadratique moyenne (MSE) entre les images corrigées $I_{P\_COR}$ et les images de référence $I_{P\_REF}$ inférieure à un certain seuil, par exemple 0.01.

On peut d'autre part utiliser pour évaluer la performance du réseau un critère supplémentaire CRIT2 caractérisant la capacité du réseau de neurones 30 à généraliser une correction sur des images $I_{P\_MES}$ qui n'appartiennent pas à la base de données $BD_{AUG}$.

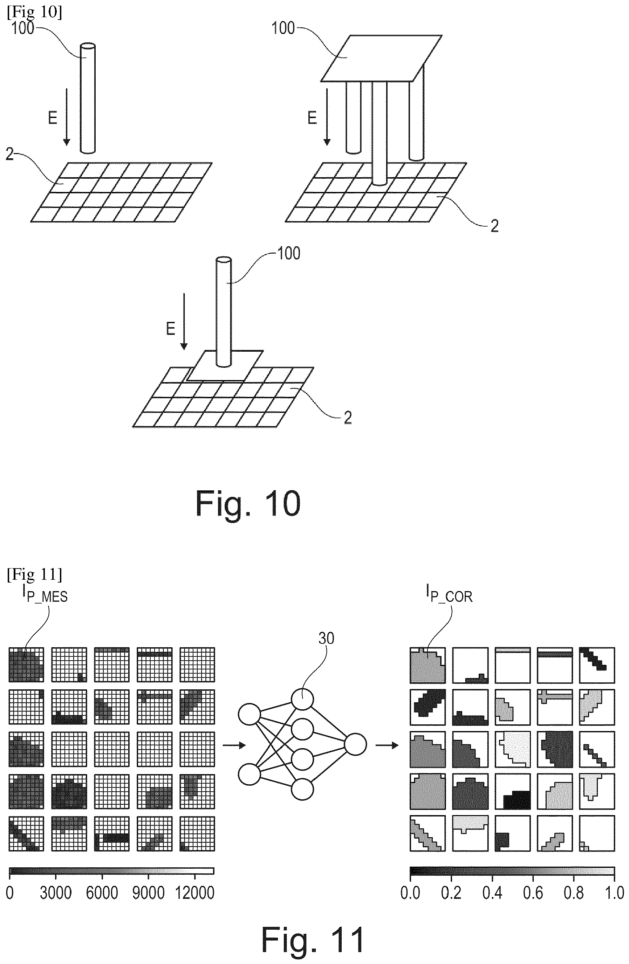

On génère par exemple une nouvelle base de données $BD_{MES\_2}$ en utilisant le banc de mesure comme décrit à l'étape 11, mais en changeant le type d'appui appliqué sur la matrice 2. On impose par exemple un effort E de pression de référence $P_R$ connue sur une ou des sous-parties de la matrice 2, en jouant sur la forme et le nombre de pointes de touche fixées sur la tête 100 du banc, tel qu'illustré à la figure 10.

Ces pointes peuvent avoir des dimensions de surface d'appui exprimées en nombre de pixels 10 de la matrice 2, de manière à faciliter la reconstitution de l'image de pression référence $I_{P\_REF}$.

On a illustré à la figure 11 un exemple d'images corrigées $I_{P\_COR}$ générées par le réseau de neurones 30 à partir des images mesurées $I_{P\_MES}$ lorsque la matrice 2 est soumise à des appuis variés de ce type.

Le critère supplémentaire CRIT2 peut être défini de plusieurs manières à partir des images corrigées de la nouvelle base de données $BD_{MES\_2}$.

A titre d'exemple, on considère qu'on applique $N_{C2}$ valeurs de pression de référence $P_R$ sollicitant chacun $N_{P2}$ pixels de la matrice 2 pour constituer la nouvelle base de données $BD_{MES\_2}$.

Pour chaque valeur de pression de référence $P_{R,k}$ avec $k \in [1, N_{C2}]$, on définit par exemple l'homogénéité $A_k$ des réponses corrigées des $N_{P2}$ pixels sollicités par l'écart entre la réponse pixel corrigée $Pxc_k$ la plus élevée et la réponse pixel la plus faible :

[Math 1]

$$A_k = \max\{Pxc_{k,m}\}_{m \in [1, N_{P2}]} - \min\{Pxc_{k,n}\}_{n \in [1, N_{P2}]}$$

En variante, on peut définir l'homogénéité $A_k$ des réponses corrigées des $N_{P2}$ pixels sollicités par la variance des réponses pixels corrigées $\{Pxc_k\}$ par rapport à la réponse moyenne $Pxc_{k,mean}$, pour chaque valeur de pression de référence $P_{R,k}$ :

[Math 2]

$$Pxc_{k,mean} = \frac{1}{N_{P2}} \sum_{m=1}^{N_{P2}} Pxc_{k,m}$$

$$A_k = \frac{1}{N_{P2}} \sum_{m=1}^{N_{P2}} (Pxc_{k,mean} - Pxc_{k,m})^2$$

Le critère CRIT2 traduit alors l'homogénéité des réponses pixels corrigées $\{Pxc_k\}$ soumis à une même valeur d'appui $P_{R,k}$ pour l'ensemble des $N_{C2}$ valeurs d'appuis appliquées, soit :

[Math 3]

$$CRIT2 = \frac{1}{N_{C2}} \sum_{k=1}^{N_{C2}} A_k$$

Le réseau de neurones est estimé d'autant plus performant dans la correction des images que la valeur du critère CRIT2 est faible. On valide par exemple l'apprentissage du réseau de neurones pour CRIT2 < 0.1 (lorsque, comme mentionné plus haut, les valeurs des réponses des pixels ont été normalisées avant le calcul du critère).

On peut se servir des critères CRIT1 et CRIT2 décrits ci-dessus pour sélectionner le réseau de neurones le plus performant parmi des réseaux de neurones d'architectures différentes, en recherchant une architecture qui minimise à la fois les deux critères susmentionnés.

De manière générale, un produit des deux critères ne constitue pas toujours une métrique suffisante pour sélectionner le réseau recherché, car ce résultat pourrait privilégier un réseau très performant sur la base de données augmentées $BD_{AUG}$ mais pauvre sur la nouvelle base de données $BD_{MES\_2}$.

On peut utiliser une somme pondérée des différents critères, en définissant des poids qui n'avantagent par exemple pas certains appuis plus que d'autres.

Pour CRIT1 < 0.01 et CRIT2 < 0.1, on définit par exemple une métrique de type « score = 1 x CRIT1 + 0.1 x CRIT2 » et sélectionne le réseau qui génère le score le plus faible.

D'autres types de critères et/ou un nombre plus important de critères peuvent bien entendu être utilisés pour la validation et/ou la sélection du réseau de neurones 30, et leur pondération respective dans la formule du score est choisie selon les applications recherchées et les moyens dont on dispose.

On prend par exemple en compte le nombre de poids synaptiques du réseau testé, notamment si le système de calcul utilisé dispose de peu de mémoire (on cherchera alors à privilégier un réseau comportant un faible nombre de poids).

On peut encore définir un critère sur la complexité des calculs unitaires effectués par le réseau, et/ou leur nombre.

Différentes architectures de réseaux de neurones répondent aux critères qui viennent d'être décrits.

On utilise par exemple un réseau de neurones présentant une architecture comportant au moins une couche convolutionnelle et une couche dense, aussi appelée « fully connected ».

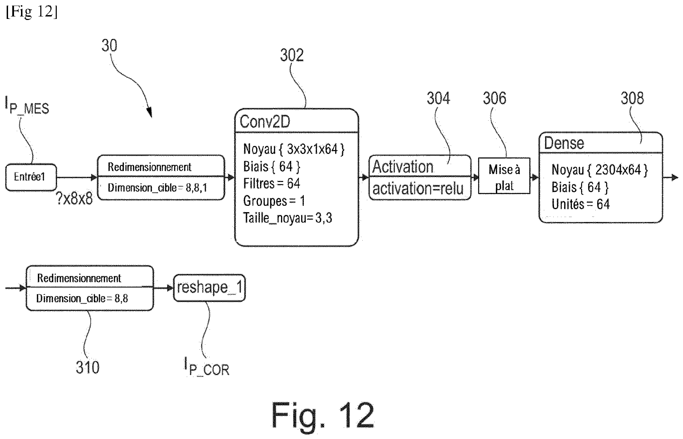

On a représenté à la figure 12 un exemple d'une telle architecture pour une matrice 2 de dimensions 8x8 pixels. Le réseau de neurones 30 comporte une première couche 302 convolutionnelle de 64 filtres utilisant des noyaux de taille 3x3, avec une activation 304 de type Relu. Cette couche est suivie par une couche d'aplatissement Flatten 306 qui transforme la sortie de la convolution en un vecteur 1D. On applique enfin une couche 308 dense de 64 neurones (8x8) et on utilise une couche de reformage Reshape 310 pour revenir en 2D (8x8).

Une telle architecture présente l'avantage d'effectuer uniquement des calculs relativement simples, et de fait rapides à exécuter et facilement portables au sein d'une unité de calcul légère de type microcontrôleur. Cependant, un nombre de paramètres important doit être mémorisé, de l'ordre de plus de 150,000, ce qui nécessite une quantité relativement élevée de mémoire statique, de type ROM, Flash ou EEPROM par exemple.

On peut encore utiliser un réseau de neurones présentant une architecture combinant des couches convolutionnelles puis déconvolutionnelles, notamment une architecture dite *«fully convolutional »* comportant uniquement des couches convolutionnelles/déconvolutionnelles.

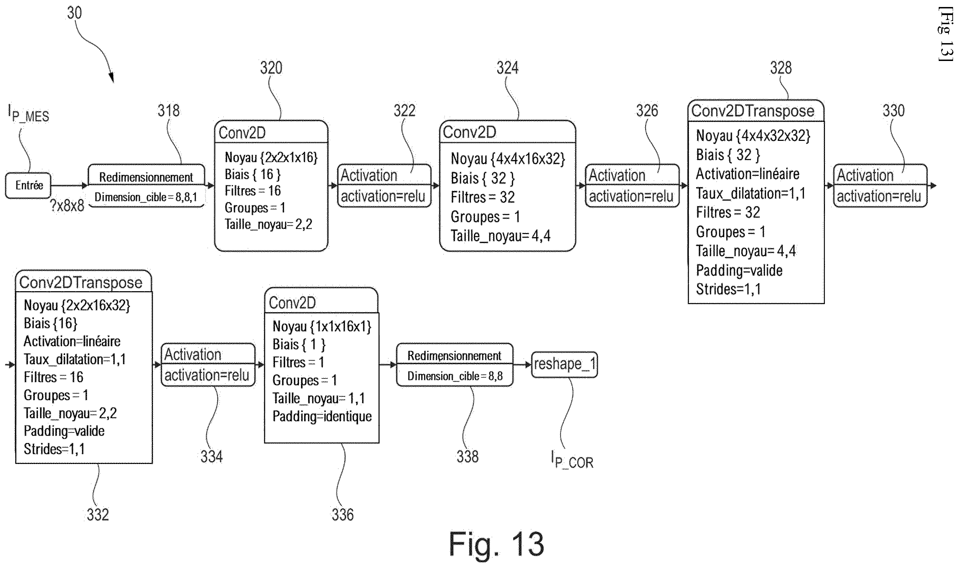

Dans l'exemple illustré à la figure 13 pour la matrice de pixels 8x8 précitée, on utilise deux couches convolutionnelles 320 et 324 avec des activations 322 et 326 de type Relu ayant successivement 16 et 32 filtres de noyaux 4x4, suivies par deux couches 328 et 332 de type « Conv2DTranspose » avec des activations 330 et 334 de type Relu ayant successivement 32 et 16 filtres de 4x4. Une couche 336 « Conv2D » est ajoutée à la sortie avec un seul filtre de taille 1x1 et l'on utilise une couche *Reshape* 338 pour mettre en forme 8x8 la sortie $I_{P\_COR}$.

Une telle architecture réclame une puissance de calcul plus élevée que la précédente du fait de la succession des procédés de convolution et de déconvolution, mais présente l'avantage d'un nombre de paramètres à mémoriser réduit, par exemple moins de 25.000 paramètres.

D'autres architectures sont possibles, par exemple des architectures de type *feed-forward* ou *bouclé,* et la paramétrisation de l'architecture choisie peut varier. Par exemple, le réseau de neurones comporte un nombre de couches cachées ou un nombre de neurones par couche différent de celui qui vient d'être décrit.

La sélection de l'architecture se fait de préférence une seule fois pour un type ou une conception de matrice 2 donnée.

Lors de la fabrication d'un nouvel exemplaire de cette matrice, on génère la base de données $BD_{MES}$ avec cette matrice et le réseau de neurones présentant l'architecture présélectionnée est entraîné puis validé suivant le procédé de calibration décrit ci-dessus.

Lors de l'utilisation du capteur, chaque image de pression $I_{P\_MES}$ mesurée par la matrice est injectée dans le réseau de neurones 30 ainsi entraîné pour être corrigée en une image $I_{P\_COR}$.

Cette correction peut être faite directement au niveau de l'électronique de gestion de la matrice 2 si celle-ci le permet, ou être déportée sur un terminal qui reçoit les images $I_{P\_MES}$ transmises par la matrice.

Bien entendu, l'invention n'est pas limitée aux exemples qui viennent d'être décrits.

Par exemple, la détection des pressions exercées sur la matrice 2 n'est pas nécessairement obtenue par mesure résistive. Elle peut se faire par mesure capacitive, en remplaçant par exemple le matériau conducteur par un matériau à constante diélectrique élevée, et en soumettant par exemple les électrodes de mesure à des tensions alternatives, ou selon toute autre méthode adaptée à mesurer une capacité.

Le capteur peut en outre être agencé pour mesurer d'autres quantités en plus de la pression et/ou la température. Une couche piézo-électrique peut être ajoutée afin de mesurer d'éventuelles vibrations ou accélérations.

Le capteur selon l'invention peut être utilisé, entre autres, pour des applications de robotique, notamment dans le cadre de la manipulation robotique dextre d'objets. Les matrices sont par exemple fixées sur toutes les surfaces du préhenseur possiblement en contact avec les objets (paume, doigt, phalanges, etc.) et permettent d'estimer la position et l'orientation de l'objet dans le préhenseur.

Dans d'autres exemples d'application, le capteur est intégré à une interface tactile homme-machine, ou comme mentionné plus haut, à une dalle métrologique de type dalle de podologue.

**Revendications**

1. Procédé de calibration d'un capteur tactile (1) comportant une matrice (2) de $N_P$ pixels tactiles (10) dont certains au moins présentent entre eux un effet de couplage réciproque, comportant les étapes consistant à :

   - appliquer sur une partie au moins des pixels une pression homogène ($P_R$),
   - générer ainsi une base de données ($BD_{MES}$) réelles d'appui homogène en faisant l'acquisition de la réponse $I_{P\_MES}$ du capteur pour différentes valeurs de la pression appliquée, la base de données ($BD_{MES}$) comprenant additionnellement des images $I_{P\_REF}$, les images $I_{P\_REF}$ étant des images de référence sur lesquelles tous les pixels tactiles (10) ont une valeur identique égale à $P_R/N_P$,
   - générer une base de données augmentée ($BD_{AUG}$) contenant des données additionnelles d'appui partiel obtenues par simulation en appliquant des masques binaires (MAS) aux données réelles d'appui homogène $I_{P\_MES}$ et aux images $I_{P\_REF}$, de manière à simuler des appuis partiels sans effet de couplage avec les pixels situés hors des zones d'appui partiel,
   - entraîner au moins un réseau de neurones (30) à délivrer une image corrigée ($I_{P\_COR}$) de la réponse $I_{P\_MES}$ du capteur en utilisant la base de données augmentée ($BD_{AUG}$)

2. Procédé selon la revendication 1, dans lequel on soumet à l'apprentissage plusieurs réseaux de neurones d'architectures différentes, et l'on sélectionne le plus performant en soumettant le capteur à au moins un appui différent (E) d'un appui ayant servi pour l'entrainement des réseaux, notamment un appui différent d'un appui homogène sur l'ensemble des pixels de la matrice (2), et en comparant les résultats ($I_{P\_COR}$) produits par ces différents réseaux aux données réelles ($I_{P\_REF}$).

3. Procédé selon la revendication 2, dans lequel ledit appui différent consiste en un appui homogène (E) exercé sur une partie seulement des pixels de la matrice, et dans lequel la sélection s'effectue sur la base au moins d'un critère de sélection (CRIT1) représentatif de l'écart entre la réponse pixel (Pxc) la plus élevée et la réponse pixel (Pxc) la plus faible pour cet appui.

4. Procédé selon l'une des revendications 1 à 3, dans lequel le réseau de neurones (30) est entraîné de manière à prendre en compte l'influence de la température (T) sur le comportement des pixels, en prenant la température comme entrée supplémentaire.

5. Procédé selon l'une quelconque des revendications 1 à 4, plusieurs masques binaires (MAS) étant utilisés simultanément sur une même image lors de la constitution de la base de données augmentée ($BD_{AUG}$), en veillant à ce que les masques ne se chevauchent pas.

6. Procédé selon l'une quelconque des revendications 1 à 5, les masques binaires (MAS) étant formés d'ellipsoïdes pixelisés dont les valeurs de grand axe (b), petit axe (a), orientation et coordonnées de leur centre (O) sur la matrice (2) sont variées, notamment pour simuler un appui ponctuel limité à un pixel ou l'appui d'un doigt sous forme de disque.

**Patentansprüche**

1. Verfahren zur Kalibrierung eines taktilen Sensors (1), der eine Matrix (2) aus $N_P$ taktilen Pixeln (10) umfasst, von denen mindestens einige untereinander einen wechselseitigen Kopplungseffekt aufweisen, umfassend die Schritte, die darin bestehen:

   - auf mindestens einen Teil der Pixel einen homogenen Druck ($P_R$) anzuwenden,
   - so eine Datenbank ($BD_{MES}$) mit realen Daten für homogenes Drücken zu erzeugen, indem die Erfassung der Antwort $I_{P\_MES}$ des Sensors für verschiedene Werte des angewandten Drucks vorgenommen wird, wobei die Datenbank ($BD_{MES}$) zusätzlich Bilder $I_{P\_REF}$ umfasst, wobei die Bilder $I_{P\_REF}$ Referenzbilder sind, auf denen alle taktilen Pixel (10) einen identischen Wert von $P_R/N_P$ haben,
   - Erzeugen einer vergrößerten Datenbank ($BD_{AUG}$), die zusätzliche Daten für partielles Drücken enthält, die durch Simulation erhalten werden, indem binäre Masken (MAS) auf die realen Daten für homogenes Drücken $I_{P\_MES}$ und auf die Bilder $I_{P\_REF}$ angewandt werden und partielle Drückvorgänge ohne Kopplungseffekt mit den Pixeln, die außerhalb der Bereiche des partiellen Drückens gelegen sind, simuliert werden,
   - Trainieren mindestens eines neuronalen Netzes (30), ein korrigiertes Bild ($I_{P\_COR}$) der Antwort $I_{P\_MES}$ des Sensors auszugeben, unter Verwendung der vergrößerten Datenbank ($BD_{AUG}$).

2. Verfahren nach Anspruch 1, wobei man mehrere neuronale Netze mit unterschiedlichen Architekturen dem Lernen unterzieht und man das leistungsstärkste auswählt, indem man den Sensor mindestens einem Drücken (E) unterzieht, das verschieden von einem Drücken ist, das zum Trainieren der Netze gedient hat, insbesondere einem Drücken, das verschieden von einem homogenen Drücken auf die Gesamtheit der Pixel de Matrix (2) ist, und indem man die Ergebnisse ($I_{P\_COR}$), die von diesen verschiedenen Netzen produziert werden, mit den realen Daten ($I_{P\_REF}$) vergleicht.

3. Verfahren nach Anspruch 2, wobei das verschiedene Drücken in einem homogenen Drücken (E) besteht, das nur auf einen Teil der Pixel der Matrix ausgeübt wird, und wobei das Auswählen auf der Grundlage mindestens eines Auswahlkriteriums (CRIT1) erfolgt, das repräsentativ für die Abweichung zwischen der höchsten Pixelantwort (Pxc) und der geringsten Pixelantwort (Pxc) für dieses Drücken ist.

4. Verfahren nach einem der Ansprüche 1 bis 3, wobei das neuronale Netz (30) so trainiert wird, dass der Einfluss der Temperatur (T) auf das Verhalten der Pixel berücksichtigt wird, wobei die Temperatur als zusätzliche Eingabe genommen wird.

5. Verfahren nach einem der Ansprüche 1 bis 4, wobei mehrere binäre Masken (MAS) gleichzeitig auf einem selben Bild beim Aufbauen der vergrößerten Datenbank ($BD_{AUG}$) verwendet werden, wobei darauf geachtet wird, dass die Masken sich nicht überlappen.

6. Verfahren nach einem der Ansprüche 1 bis 5, wobei die binären Masken (MAS) aus gepixelten Ellipsoiden gebildet werden, deren Werte für die große Achse (b), die kleine Achse (a), die Ausrichtung und die Koordinaten ihres Mittelpunkts (O) auf der Matrix (2) unterschiedlich sind, insbesondere, um ein begrenztes punktuelles Drücken auf ein Pixel oder das Drücken mit einem Finger in Form einer Scheibe zu simulieren.

**Claims**

1. Method for calibrating a tactile sensor (1) comprising a matrix (2) of $N_P$ tactile pixels (10) at least some of which have a reciprocal crosstalk effect between them, comprising the steps of:

   - applying a homogeneous pressure ($P_R$) to at least some of the pixels,
   - thus generating a real homogeneous pressing database ($BD_{MES}$) by acquiring the response $I_{P\_MES}$ from the sensor for various values of the applied pressure , the database ($BD_{MES}$) additionally comprising images $I_{P\_REF}$, the images $I_{P\_REF}$ being reference images in which all of the tactile pixels (10) have an identical value equal to $P_R/N_P$,

- generating an augmented database ($BD_{AUG}$) containing additional partial pressing data obtained through simulation by applying binary masks (MAS) to the real homogeneous pressing data $I_{P\_MES}$ and to the images $I_{P\_REF}$, so as to simulate partial pressing without a crosstalk effect with the pixels situated outside partial pressing areas,

- training at least one neural network (30) to deliver a corrected image ($I_{P\_COR}$) of the response $I_{P\_MES}$ from the sensor using the augmented database ($BD_{AUG}$).

2. Method according to Claim 1, wherein a plurality of neural networks with different architectures are subjected to the training, and the one with the best performance is selected by subjecting the sensor to at least one press (E) different from a press that was used to train the networks, in particular a press different from a homogeneous press on all of the pixels of the matrix (2), and by comparing the results ($I_{P\_COR}$) produced by these various networks with the real data ($I_{P\_REF}$).

3. Method according to Claim 2, wherein said different press consists of a homogeneous press (E) exerted on only some of the pixels of the matrix, and wherein the selection is made on the basis of at least one selection criterion (CRIT1) representative of the difference between the highest pixel response (Pxc) and the lowest pixel response (Pxc) for this press.

4. Method according to one of Claims 1 to 3, wherein the neural network (30) is trained so as to take into account the influence of temperature (T) on the behaviour of the pixels, by taking the temperature as additional input.

5. Method according to any one of Claims 1 to 4, a plurality of binary masks (MAS) being used at the same time on one and the same image when forming the augmented database ($BD_{AUG}$), while ensuring that the masks do not overlap.

6. Method according to any one of Claims 1 to 5, the binary masks (MAS) being formed of pixelated ellipsoids for which the values of the major axis (b), minor axis (a), orientation and coordinates of their centre (O) on the matrix (2) are varied, in particular in order to simulate a one-time press limited to one pixel or pressing of a finger in the shape of a disc.

[Fig 1]

Fig. 1

[Fig 2a]

Fig. 2A

[Fig 2b]

Fig. 2B

[Fig 2c]

Fig. 2C

[Fig 2d]

Fig. 2D

[Fig 3]

Fig. 3

[Fig 4]

Fig. 4

[Fig 5]

Fig. 5

[Fig 6]

Fig. 6

[Fig 7]

Fig. 7

[Fig 8a]

Fig. 8A

[Fig 8b]

0    10/64    20/64    30/64    40/64

$I_{P\_REF}$

$I_{P\_REF}$

# Fig. 8B

[Fig 9]

$BD_{MES}$                    $BD_{AUG}$

$I_{P\_MES}$        MAS        $I_{P\_MES}$

a

b    O

$I_{P\_REF}$                    $I_{P\_REF}$

# Fig. 9

[Fig 10]

Fig. 10

[Fig 11]

Fig. 11

[Fig 12]

Fig. 12

[Fig 13]

Fig. 13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 101281073

- CN 110174213

**Littérature non-brevet citée dans la description**

- **CASTRO FABIAN et al.** Plantar Pressure Measurement System With Improved Isolated Drive Feedback Circuit and ANN: Development and Characterization. *IEEE SENSORS JOURNAL*, 28 May 2020, vol. 20 (19), ISSN 1530-437X, 11034-11043

- **ROSENBERG**. The UnMousePad - An Interpolating Multi-Touch Force-Sensing Input Pad. *ACM SIGGRAPH 2009 papers*, 2009, 1-9